(19) **Europäisches Patentamt**
**European Patent Office**
**Office européen des brevets**

(11) **EP 4 308 893 B1**

(12) **EUROPEAN PATENT SPECIFICATION**

(45) Date of publication and mention
of the grant of the patent:
**28.01.2026 Bulletin 2026/05**

(21) Application number: **21714833.7**

(22) Date of filing: **19.03.2021**

(51) International Patent Classification (IPC):
**G01J 3/10** *(2006.01)* **G01J 3/42** *(2006.01)*
**G01J 11/00** *(2006.01)*

(52) Cooperative Patent Classification (CPC):
**G01J 3/10; G01J 3/42; G01J 11/00;**
G01J 2001/4238

(86) International application number:
**PCT/EP2021/057079**

(87) International publication number:
**WO 2022/194386 (22.09.2022 Gazette 2022/38)**

(54) **METHOD AND SPECTROSCOPIC MEASURING APPARATUS FOR MEASURING A SPECTRAL RESPONSE OF A SAMPLE**

VERFAHREN UND SPEKTROSKOPISCHE MESSVORRICHTUNG ZUR MESSUNG EINER SPEKTRALANTWORT EINER PROBE

PROCÉDÉ ET APPAREIL DE MESURE SPECTROSCOPIQUE POUR MESURE DE RÉPONSE SPECTRALE D'ÉCHANTILLON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.01.2024 Bulletin 2024/04**

(73) Proprietor: **Max-Planck-Gesellschaft zur Förderung der Wissenschaften e.V.**
**80539 München (DE)**

(72) Inventors:
• **PUPEZA, Ioachim**
**82299 Türkenfeld (DE)**
• **HECKL, Oliver H.**
**1090 Wien (AT)**

(74) Representative: **v. Bezold & Partner Patentanwälte - PartG mbB**
**Ridlerstraße 57**
**80339 München (DE)**

(56) References cited:
• **PUPEZA IOACHIM ET AL: "Field-resolved infrared spectroscopy of biological systems", NATURE, NATURE PUBLISHING GROUP UK, LONDON, vol. 577, no. 7788, 1 January 2020 (2020-01-01), pages 52 - 59, XP036976154, ISSN: 0028-0836, DOI: 10.1038/S41586-019-1850-7**
• **PUPEZA IOACHIM ET AL: "Field-resolved infrared spectroscopy of biological systems", NATURE, vol. 577, no. 7788, 1 January 2020 (2020-01-01), London, pages 52 - 59, XP055866967, ISSN: 0028-0836, DOI: 10.1038/ s41586-019-1850-7**
• **WILLENBERG BENJAMIN ET AL: "Femtosecond dual-comb Yb:CaF 2 laser from a single free-running polarization-multiplexed cavity for optical sampling applications", OPTICS EXPRESS, vol. 28, no. 20, 28 September 2020 (2020-09-28), US, pages 30275, XP055867040, ISSN: 2161-2072, DOI: 10.1364/OE.403072**
• **FELLINGER JAKOB ET AL: "Tunable dual-comb from an all-polarization-maintaining single-cavity dual-color Yb:fiber laser", OPTICS EXPRESS, vol. 27, no. 20, 19 September 2019 (2019-09-19), pages 28062, XP055867318, DOI: 10.1364/OE.27.028062**

EP 4 308 893 B1

- LIAO RUOYU ET AL: "Dual-comb generation from a single laser source: principles and spectroscopic applications towards mid-IR-A review", JOURNAL OF PHYSICS: PHOTONICS, vol. 2, no. 4, 22 September 2020 (2020-09-22), pages 042006, XP055867325, DOI: 10.1088/2515-7647/aba66e

- ZHAO CHUNBO ET AL: "Study on the repetition rate locking system of the femtosecond laser", PROCEEDINGS OF SPIE, IEEE, US, vol. 9522, 13 April 2015 (2015-04-13), pages 95220M - 95220M, XP060053430, ISBN: 978-1-62841-730-2, DOI: 10.1117/12.2179217

## Description

Field of the invention

The invention relates to a method and a spectroscopic measuring apparatus for measuring a spectral response of a sample, in particular by employing electro-optic sampling of a probe light field after an interaction with the sample. Applications of the invention are available e. g. in the field of electric-field-resolved spectroscopy of samples, e. g. biological samples and/or environmental samples. Field-resolved spectrometers are used for instance in fundamental science to study light-matter interaction, but are gaining increased popularity for applications in medical diagnosis and early recognition of diseases, like cancer.

Technical background

In the present specification, reference is made to the following prior art illustrating technical background of the invention and related techniques:

[1] Haus, H. A., Fujimoto, J. G. & Ippen, E. P. Structures for additive pulse mode locking. J. Opt. Soc. Am. B 8, 2068 (1991);

[2] Zewail, A. H. Femtochemistry: Atomic-Scale Dynamics of the Chemical Bond. The Journal of Physical Chemistry A 104, 5660-5694 (2000);

[3] Reichert, J., Holzwarth, R., Udem, T. & Hksch, T. W. Measuring the frequency of light with mode-locked lasers '. Optics Communications 172, 59-68 (1999);

[4] Telle, H. R. et al. Carrier-envelope offset phase control: A novel concept for absolute optical frequency measurement and ultrashort pulse generation. Appl Phys B 69, 327-332 (1999);

[5] Apolonski, A. et al. Controlling the Phase Evolution of Few-Cycle Light Pulses. Phys. Rev. Lett. 85, 740-743 (2000);

[6] Jones, D. J. Carrier-Envelope Phase Control of Femtosecond Mode-Locked Lasers and Direct Optical Frequency Synthesis. Science 288, 635-639 (2000);

[7] Krausz, F. & Ivanov, M. Attosecond physics. Reviews of Modern Physics 81, 163-234 (2009);

[8] Udem, T., Holzwarth, R. & Hänsch, T. W. Optical frequency metrology. Nature 416, 5 (2002);

[9] Ye, J. & Cundiff, S. T. Femtosecond optical frequency comb: principle, operation, and applications. (Springer, 2005);

[10] Griffiths, P. R. & De Haseth, J. A. Fourier transform infrared spectrometry. (Wiley-Interscience, 2007);

[11] Keilmann, F., Gohle, C. & Holzwarth, R. Time-domain mid-infrared frequency-comb spectrometer. Optics Letters 29, 1542 (2004);

[12] Bernhardt, B. et al. Cavity-enhanced dual-comb spectroscopy. Nature Photonics 4, 55-57 (2010);

[13] Coddington, I., Swann, W. & Newbury, N. Coherent Multiheterodyne Spectroscopy Using Stabilized Optical Frequency Combs. Physical Review Letters 100, (2008);

[14] Newbury, N. R., Coddington, I. & Swann, W. Sensitivity of coherent dual-comb spectroscopy. Optics Express 18, 7929 (2010);

[15] Muraviev, A. V., Smolski, V. O., Loparo, Z. E. & Vodopyanov, K. L. Massively parallel sensing of trace molecules and their isotopologues with broadband subharmonic mid-infrared frequency combs. Nature Photonics 12, 209-214 (2018);

[16] Timmers, H. et al. Molecular fingerprinting with bright, broadband infrared frequency combs. Optica 5, 727 (2018);

[17] Truong, G.-W. et al. Accurate frequency referencing for fieldable dual-comb spectroscopy. Opt. Express 24, 30495 (2016);

[18] Ideguchi, T., Poisson, A., Guelachvili, G., Hänsch, T. W. & Picqué, N. Adaptive dual-comb spectroscopy in the green region. Optics Letters 37, 4847-4849 (2012);

[19] Ideguchi, T., Poisson, A., Guelachvili, G., Picqué, N. & Hänsch, T. W. Adaptive real-time dual-comb spectroscopy. Nature communications 5, 3375 (2014);

[20] Giaccari, P., Deschênes, J.-D., Saucier, P., Genest, J. & Tremblay, P. Active Fourier-transform spectroscopy combining the direct RF beating of two fiber-based mode-locked lasers with a novel referencing method. Optics Express 16, 4347-4365 (2008);

[21] Cassinerio, M., Gambetta, A., Coluccelli, N., Laporta, P. & Galzerano, G. Absolute dual-comb spectroscopy at 1.55 $\mu$m by free-running Er:fiber lasers. Applied Physics Letters 104, 231102 (2014);

[22] Link, S. M., Maas, D. J. H. C., Waldburger, D. & Keller, U. Dual-comb spectroscopy of water vapor with a free-running semiconductor disk laser. Science 356, 1164-1168 (2017);

[23] Znakovskaya, I. et al. Dual frequency comb spectroscopy with a single laser. Optics Letters 39, 5471-5474 (2014);

[24] Ideguchi, T., Nakamura, T., Kobayashi, Y. & Goda, K. Kerr-lens mode-locked bidirectional dual-comb ring laser for broadband dual-comb spectroscopy. Optica 3, 748-753 (2016);

[25] Nurmemet, A., Kayes, Imrul, M., Rekik, A. & Rochette, M. Bidirectional mode-locked thulium-doped fiber laser. Applied Optics 57, 7198-7202 (2018);

[26] Akosman, A. E. & Sander, M. Y. Dual comb generation from a mode-locked fiber laser with orthogonally polarized interlaced pulses. Optics Express 25, 18592-18602 (2017);

[27] Nakajima, Y., Hata, Y. & Minoshima, K. All-polarization-maintaining, polarization-multiplexed, dual-comb fiber laser with a nonlinear amplifying loop mirror. Optics Express 27, 14648-14656 (2019);

[28] Link, S. M. et al. Dual-comb modelocked laser. Optics Express 23, 5521-5531 (2015);

[29] Nürnberg, J. et al. An unstabilized femtosecond semiconductor laser for dual-comb spectroscopy of acetylene. Optics Express 27, 3190-3199 (2019);

[30] Evans, J. M., Spence, D. E., Burns, D. & Sibbett, W. Dual-wavelength self-mode-locked Ti:sapphire laser. 18, 1074-1076 (1993);

[31] Zhang, H., Tang, D. Y., Wu, X. & Zhao, L. M. Multi-wavelength dissipative soliton operation of an erbium-doped fiber laser. Optics Express 17, 12692-12697 (2009);

[32] Zhao, X. et al. Switchable, dual-wavelength passively mode-locked ultrafast fiber laser based on a single-wall carbon nanotube modelocker and intracavity loss tuning. Optics Express 19, 1168-1173 (2011);

[33] Liu, X. et al. Versatile multi-wavelength ultrafast fiber laser mode-locked by carbon nanotubes. Scientific Reports 3, 2718 (2013);

[34] Zhao, X. et al. Picometer-resolution dual-comb spectroscopy with a free-running fibre laser. Optics Express 24, 21833-21845 (2016);

[35] Liao, R. et al. Dual-comb spectroscopy with a single free-running thulium-doped fiber laser. Optics Express 26, 11046-11054 (2018);

[36] Nakajima, Y., Hata, Y. & Minoshima, K. All-Polarization-Maintaining Dual-Comb Fiber Laser with Nonlinear Amplifying Loop Mirror. Conference on Lasers and Electro-Optics 1, STu4K.4 (2018);

[37] Li, R. et al. All-polarization-maintaining dual-wavelength mode-locked fiber laser based on Sagnac loop filter. Optics Express 26, 28302-28311 (2018);

[38] Fellinger, J., Winkler, G., Mayer, A. S., Steidle, L. R. & Heckl, O. H. Tunable dual-color operation of Yb:fiber laser via mechanical spectral subdivision. Optics Express 27, 5478-5486 (2019);

[38A] US 2019/280450 A1;

[39] Chen, J. et al. Dual-comb spectroscopy of methane based on a free-running Erbium-doped fiber laser. Optics Express 27, 11406-11412 (2019);

[40] Luo, X. et al. Tunable and switchable all-fiber dual-wavelength mode locked laser based on Lyot filtering effect. Optics Express 27, 14635-14647 (2019);

[41] Liao, R. et al. Dual-comb spectroscopy with a single free-running thulium-doped fiber laser. Optics Express 26, 11046-11054 (2018);

[42] Saule, T. et al. Phase-stable, multi-$\mu$J femtosecond pulses from a repetition-rate tunable Ti:Sa-oscillator-seeded Yb-fiber amplifier. Applied Physics B 123, (2017);

[43] Brida, D., Krauss, G., Sell, A. & Leitenstorfer, A. Ultrabroadband Er:fiber lasers: Ultrabroadband Er:fiber lasers. Laser & Photonics Reviews 8, 409-428 (2014);

[44] Gaida, C. et al. High-power frequency comb at 2 $\mu$m wavelength emitted by a Tm-doped fiber laser system. Optics Letters 43, 5178 (2018);

[45] Jocher, C., Eidam, T., Hädrich, S., Limpert, J. & Tünnermann, A. Sub 25 fs pulses from solid-core nonlinear compression stage at 250 W of average power. Optics Letters 37, 4407 (2012);

[46] Gaida, C. et al. Self-compression in a solid fiber to 24 MW peak power with few-cycle pulses at 2 $\mu$m wavelength. Optics Letters 40, Issue 22, pp. 5160-5163 (2015);

[47] Schulte, J., Sartorius, T., Weitenberg, J., Vernaleken, A. & Russbueldt, P. Nonlinear pulse compression in a multi-pass cell. Optics Letters 41, 4511 (2016);

[48] Fritsch, K., Poetzlberger, M., Pervak, V., Brons, J. & Pronin, O. All-solid-state multipass spectral broadening to sub-20 fs. Optics Letters 43, 4643 (2018);

[49] Gaida, C. et al. Watt-scale super-octave mid-infrared intrapulse difference frequency generation. Light: Science & Applications 7, (2018);

[50] Boyd, R. W. Nonlinear optics. (Academic Press, 2008);

[51] Fattahi, H., Schwarz, A., Keiber, S. & Karpowicz, N. Efficient, octave-spanning difference-frequency generation using few-cycle pulses in simple collinear geometry. Optics Letters 38, 4216 (2013);

[52] Kübler, C., Huber, R. & Leitenstorfer, A. Ultrabroadband terahertz pulses: generation and field-resolved detection. Semiconductor Science and Technology 20, S128-S133 (2005);

[53] Pupeza, I. et al. High-power sub-two-cycle mid-infrared pulses at 100 MHz repetition rate. Nature Photonics 9, 721-724 (2015);

[54] Butler, T. P. et al. Watt-scale 50-MHz source of single-cycle waveform-stable pulses in the molecular fingerprint region. Optics Letters 44, 1730 (2019);

[55] Tonouchi, M. Cutting-edge terahertz technology. Nature Photonics 1, 97-105 (2007);

[56] Xu, J. et al. Three-octave terahertz pulses from optical rectification of 20 fs, 1 $\mu$m, 78 MHz pulses in GaP. J. Phys. B: At. Mol. Opt. Phys. 51, 154002 (2018);

[57] Hussain, S. A., Schweinberger, W., Buberl, T., Hofer, C. & Pupeza, I. Train of Ultrashort Mid-Infrared Pulses with Sub-mrad Carrier-Envelope Phase Stability. in 2019 Conference on Lasers and Electro-Optics Europe & European Quantum Electronics Conference (CLEO/Europe-EQEC) 1-1 (IEEE, 2019). doi:10.1109/CLEOE-EQEC.2019.8872659;

[58] Wu, Q. & Zhang, X. -C. Free-space electro-optic sampling of terahertz beams. Applied Physics Letters 67, 3523-3525 (1995);

[59] Nahata, A., Weling, A. S. & Heinz, T. F. A wideband coherent terahertz spectroscopy system using optical rectification and electro-optic sampling. Applied Physics Letters 69, 2321-2323 (1996);

[60] Gallot, G. & Grischkowsky, D. Electro-optic detection of terahertz radiation. Journal of the Optical Society of America B 16, 1204 (1999);

[61] Ioachim Pupeza et al. Field-resolved infrared spectroscopy of biological systems. manuscript under revision, Nature 577, 52-59 (2020);

[62] Coddington, I., Swann, W. C. & Newbury, N. R. Time-domain spectroscopy of molecular free-induction decay in the infrared. Optics Letters 35, 1395 (2010);

[63] Kowligy, A. S. et al. Infrared electric field sampled frequency comb spectroscopy. Sci. Adv. 5, eaaw8794 (2019);

[64] Keiber, S. et al. Electro-optic sampling of near-infrared waveforms. Nature Photonics 10, 159-162 (2016);

[65] Porer, M., Ménard, J.-M. & Huber, R. Shot noise reduced terahertz detection via spectrally postfiltered electro-optic sampling. Optics Letters 39, 2435 (2014); and

[66] Schweinberger, Vamos, Xu, Hussain, Baune, Rode, and Pupeza, "Interferometric delay tracking for low-noise Mach-Zehnder-type scanning measurements," Opt. Express 27, 4789-4798 (2019).

Modelocked laser oscillators currently enable the most advanced control over broadband optical electric fields, underlying a constantly growing number of applications in both time-domain and frequency-domain (precision) optical metrology. They generate trains of equidistant light pulses with highly repeatable intensity envelopes [1]. This temporal structure of their emission, together with pulse durations reaching down to merely a few oscillation cycles of the optical carrier wave, render these light pulses short enough for real-time observations of picosecond-to-femtosecond nuclear dynamics in molecules [2]. Furthermore, while the mechanisms responsible for laser modelocking are insensitive to the phase of the carrier field with respect to the pulse envelope, techniques for the control of this parameter ([3] to [6]) brought about the next - and so far, highest - level of control over broadband light fields. Thus, phase-controlled femtosecond pulses have opened the door to time-domain metrology of the so far fastest observed processes in nature, namely attosecond-scale electron dynamics in matter [7].

The train of temporally equidistant pulses output by a (phase-stabilized) modelocked laser exhibits a spectrum consisting in a multitude of equidistant narrow lines, forming an optical frequency comb ([8], [9]). The frequency $f_N$ of each such "comb mode" can be parametrized as $f_N = f_0 + N f_r$, where $f_r = 1/T_r$ and $f_0$ are two radio frequencies, corresponding to the inverse roundtrip time $T_r$ of the optical pulse inside the modelocked oscillator, and to an overall comb offset frequency $f_0$, respectively, and $N$ is an integer. With $N$ in the order of about $10^6$, this parametrization provides a link between the optical-frequency domain of $f$, lying in the few-to-100's of THz, and the radio-frequency domain (about 100 MHz), affording a unique, high-precision means of absolute measurement and control of optical frequencies.

A particularly successful application drawing on the temporal coherence of frequency combs has been dual-comb spectroscopy (DCS). Here, Fourier-transform spectroscopy [10] (FTS) is implemented with two frequency combs with slightly detuned repetition frequencies ([11] to [14]). This results in an effective scan range of many meters, affording high (comb-resolved) frequency resolution, it avoids moving parts decreasing the complexity otherwise necessary for such high resolutions, and enables scan speeds faster than the characteristic times of most of the acoustic noise. With these advantages, DCS is rapidly evolving to a powerful quantitative analytical tool, in particular for gas-phase infrared spectroscopy ([12], [15], and [16]).

Current implementations of DCS, however, suffer from several shortcomings. Firstly, most commonly, two independent oscillators are used to generate the (at least) two frequency combs. Besides considerable system complexity, this introduces the need for the mutual stabilization of multiple comb parameters with several control loops, unavoidably affected by residual jitter. In particular, when pulse trains originate from two independent lasers, active stabilization can quickly become a complex and difficult task. Different methods have already been presented to reduce the complexity of dual-comb setups, for example by phase-locking the two frequency combs to an external cavity diode laser [17] or using adaptive sampling techniques ([18] to [21]).

A simplification can be obtained by the generation of two pulse trains with a single laser cavity: mutual coherence due to common-mode noise cancellation enables spectroscopy with a free-running laser [22]. Single-cavity dual-combs have been obtained using various mechanisms, e.g. by separating the two pulse trains using different travel directions ([23] to [25]), polarization ([26], [27]) or branched optical paths in a birefringent crystal ([28], [29]). A further known scheme is based on using a single-cavity dual-color/dual-comb fiber laser, where a single laser cavity emits two pulse trains with different center wavelengths ([30]). Non-zero intra-cavity dispersion leads to a difference in repetition rate for the two emitted pulse trains. Based on state-of-the-art fiber lasers, the dual-color/dual-comb approach ([31] to [40]) does not need active stabilization of the comb parameters ([34], [39] and [41]).

For instance, Zhao et al. described a carbon nanotube mode-locked dual-color erbium doped fiber laser [32], which then further evolved into a single-cavity dual-comb and enabled free-running spectroscopy [34]. Subsequently, Liao et al. demonstrated a thulium-doped nonlinear amplifying loop mirror (NALM) mode-locked dual-color dual-comb laser, pushing this technique towards the mid-infrared spectral region [41]. Furthermore, Li et al. focused on improving the stability of such systems to enable spectroscopy outside a laboratory setting. They reported an all polarization-maintaining (PM) dual-wavelength mode-locked erbium fiber laser, using a Sagnac loop filter, reaching a repetition rate around 40 MHz with a difference in repetition rate ($\Delta f_{\text{rep}}$) rate of around 900 Hz, leading to a non-aliasing dual-comb bandwidth of 0.9 THz [37]. More recently, Chen et al. closed the spectral gap between the erbium and the thulium emission spectra using nonlinear broadening in a fiber [39].

Secondly, traditional DCS suffers from shortcomings well-known in FTS. Among those, the entire sample response impinging on the detector(s) at all times imposes severe intensity-noise and detector-dynamic-range sensitivity and power scaling limitations ([14]).

Field-resolved spectroscopy (FRS) employing electro-optic sampling (EOS) ([58] to [61]) is a further advanced technique that is capable of overcoming the limitations of Fourier-transform spectroscopy, due to "carving out" an ultrashort fraction of the sample response, via nonlinear frequency upconversion involving a near-infrared gating pulse. In FTS, this step is absent. Thus, in FRS, in the wake of an impulsive excitation, only photons stemming from the pure sample response (e.g., the free-induction decay of impulsively-excited molecular vibrations) make it to the detector(s), while in FTS, the entire sample response, including the excitation remaining after transmission through the sample, impinges on the detectors for all delays. The excitation remaining after interaction with the sample being eliminated by nonlinear gating, its (intensity) noise does not affect the sensitivity of FRS in the wake of the excitation. Furthermore, the temporally "carved out" portion of the sample response detected in the wake of the excitation is orders of magnitude smaller than the time-integrated sample response always impinging on the detector(s) in FTS. Thus, FRS circumvents/strongly mitigates the well-known, detector-dynamic-range sensitivity limitation of FTS ([14], [62]).

Typical field-resolved spectrometers in the mid-IR and THz spectral region rely on a pump laser to generate the mid-IR or THz radiation. A small portion of this laser is split off and subsequently used for probing the generated fields via electro-optic sampling (EOS) [56]. Scanning the probe laser over the mid-IR or THz fields is done with the help of a mechanical delay line. However, as a substantial disadvantage of the conventional techniques, the mechanical delay line is limited with respect to its speed, travel range and precision of its position [66].

Objective of the invention

The objectives of the invention are to provide an improved method of measuring a spectral response of a sample and an improved spectroscopic measuring apparatus, being capable of avoiding disadvantages of conventional techniques. In particular, the inventive technique is to be capable of measuring the spectral response of the sample by field-resolved spectroscopy with reduced limitations in terms of speed, travel range and precision of delay adjustment, at a reduced complexity, in particular circumventing extensive active stabilization loops, and/or with improved noise robustness, sensitivity and/or power scalability of electro-optic-sampling.

Summary of the invention

The above objectives are solved by a method of measuring a spectral response of a sample and a spectroscopic measuring apparatus, resp., comprising the features of the independent claims. Preferred embodiments and applications of the invention are defined in the dependent claims.

According to a first general aspect of the invention, the above objective is solved by a method of measuring a spectral response of a sample according to claim 1. The method of measuring a spectral response of a sample comprises the steps of generating probe light pulses having a primary spectrum with a fs pulse laser source device, generating gate light pulses with the fs pulse laser source device, wherein the gate light pulses have an adjustable temporal relationship (delay) relative to the probe light pulses, irradiating the sample with the probe light pulses, including an interaction of the probe light pulses and the sample, and temporally resolved detecting of the probe light pulses having a modified spectrum, which deviates from the primary spectrum as a result of the interaction of the probe light and the sample, said modified spectrum being characteristic of the spectral response (e. g. spectrally resolved absorption, transmission or reflection) of the sample. The detecting step comprises electro-optic sampling a temporal shape of the probe light pulses after the interaction with the sample, wherein the probe light pulses and the gate light pulses are superimposed with varying temporal relationship in an electro-optic element for sampling the temporal shape of the probe light pulses. The spectral response of the sample is obtained based on the temporal shape of the probe light pulses, e. g. based on a Fourier transformation of the temporal shape of the probe light pulses (in particular temporal course of a signal representing an amplitude of the probe light pulses) after the interaction with the sample.

According to the invention, the fs pulse laser source device comprises a multi color master oscillator including at least one gain medium and generating a first laser pulse train and a second laser pulse train, which have different repetition frequencies (or: rates) $f_{r1}$ and $f_{r2}$ = $f_{r1} \pm \Delta f_r$ with a repetition frequency difference (or: spacing) $\Delta f_r$, wherein the probe light pulses are generated using one of the first and second laser pulse trains and the gate light pulses are generated using the other one of the first and second laser pulse trains, the probe light pulses are generated by driving an optical rectification in an optically non-linear crystal by the first laser pulse train, and the temporal relationship of the gate light pulses relative to the probe light pulses is adjusted by setting the repetition frequency difference $\Delta f_r$.

According to a second general aspect of the invention, the above objective is solved by a spectroscopic measuring apparatus according to claim 8. Preferably, the spectroscopic measuring apparatus of the second general aspect of the invention or an embodiment thereof is adapted for executing the method of measuring a spectral response of a sample according to the first general aspect of the invention or an embodiment thereof.

Advantageously, the invention executes the EOS measurement without a mechanical delay line. As a further advantage, the invention allows for the combination of the exquisite noise robustness, sensitivity and power scalability of electro-optic-sampling based field-resolved spectroscopy with the outstanding frequency resolution and fast-scanning advantages of frequency-comb spectroscopy, at a reduced complexity, in particular circumventing extensive active stabilization loops.

The multi color master oscillator providing the fs pulse laser source device is a pulsed multi-color laser device, i. e. a laser device being adapted for laser emissions of the two or more pulse trains (pulses sequences) with different centre wavelengths and accordingly different repetition rates, as it is known e. g. from [3] or [4]. The inventors have found that a pump laser used with the conventional field-resolved spectroscopy can be replaced by the multi color master oscillator, wherein one part of the output is used as the probe light (pump) and preferably amplified to power levels adapted for obtaining a detectable spectral sample response from the interaction of the probe light and the sample, and the other part of the output is used for providing the gate light pulses. In this inventive configuration, both laser pulse trains will sample each other due to their slightly detuned repetition rates (repetition frequency difference $\Delta f_r$). This allows for electro-optic sampling with a delay scan, but without a mechanical delay stage. By setting the repetition frequency difference, the speed, travel range and precision of delay adjustment can be controlled. Advantageously, this approach simplifies the measuring set-up for field-resolved spectroscopy and even allows for an absolute wavelength calibration due to the lack of uncertainty in the movement and absolute position of the delay stage. As a further advantage, the invention combines the advantages of field-resolved spectroscopy with an outstanding frequency resolution and fast-scanning advantages as it is obtained in the past with frequency-comb spectroscopy only.

According to a preferred embodiment of the invention, the repetition frequencies $f_{r1}$ and $f_{r2}$ are set in a range from 10 MHz to 10 GHz, and the repetition frequency difference $\Delta f_r$ is set in a range from 10 Hz, in particular from 100 Hz, up to 100 kHz. In terms of the spectroscopic measuring apparatus, the fs pulse laser source device is adapted for setting the repetition frequencies and the repetition frequency difference in the said ranges. Advantageously, the invention can be implemented with broad ranges of repetition frequencies and repetition frequency differences, thus facilitating an adaptation of the measuring set-up to the requirements of a particular sample under investigation, in particular to the spectral and temporal properties of the sample response.

According to a further preferred embodiment of the invention, the at least one gain medium of the multi color master oscillator is coupled with multiple spectral band filters being matched to different spectral emission lines of the at least one gain medium. In case of a dual color master oscillator, two spectral band filters are provided. Each of the spectral band filters transmits only one of the different spectral emission lines. The bandwidths of the spectral band filters have no or negligible overlap. Advantageously, the band filters facilitate a spectral separation of the first and second pulse trains.

Advantageously, multiple configurations of the multi color master oscillator are available. According to a first variant, the multi color master oscillator may comprise one single gain medium, which is a multi-line gain medium, preferably a solid medium. Using the single gain medium may have advantages for a compact configuration of the master oscillator and in terms of noise reduction. Alternatively, according to a second variant, the multi color master oscillator may comprise multiple, e. g. two or more, gain media, resulting in advantages e. g. for setting the centre wavelengths of the first and second pulse trains by selecting appropriate gain media, preferably solid media.

Preferably, the multi color master oscillator includes a fiber laser or a solid-state laser, wherein the at least one gain medium includes at least one of Er, Ti, Ho, Nd, Pr, Cr, Yb and Tm. With these embodiments, advantages with regard to the selection of appropriate spectral characteristics of the first and second pulse trains.

Basically, the output of the multi color master oscillator can be directly used for providing the probe light pulses, e. g. if the centre wavelength of the probe light pulses is up to a few THz. Alternatively, if according to a further embodiment of the invention, the probe light pulses are generated by subjecting the one of the first and second laser pulse trains to at least one of a pulse amplification and a temporal compression, additional degrees of freedom for adjusting the characteristics of the probe light pulses, in particular for inducing a strong interaction with the sample, are obtained. The pulse amplification and/or temporal compression are applied to the initial output of the multi color master oscillator by employing a first pulse modification device, in particular a first pulse amplification device and/or a first temporal compression device, resp., using e. g. optically nonlinear components and/or linear components, like a grating compressor. Preferably, the probe light pulses are generated by subjecting the one of the first and second laser pulse trains to chirped-pulse fiber amplification to a power equal to or above 50 mW, particularly preferred above 500 mW, e. g. with a chirped-pulse fiber amplification device. The high pulse power applied provides advantages for improving the detectable amplitude of the sample response.

According to examples not falling under the scope of the claims, the probe light pulses can be subjected to an active phase-stabilization, which has advantages in particular for obtaining a train of powerful, waveform-stable pulses. The phase-stabilization can be applied with phase-stabilization device, as described e. g. in [42] and [44], to the initial output of the multi color master oscillator or to the probe light pulses after pulse amplification and/or temporal compression.

Alternatively, according to the invention, the probe light pulses are generated, preferably after pulse amplification and/or temporal compression, by driving an optical rectification (OR). The nonlinear OR process, also known as intrapulse difference-frequency generation, yields a train of broadband pulses at the original repetition frequency, however with nominally identical electric-field waveforms, without the need of active stabilization. OR is applied with an optically non-linear crystal, e. g. as described in [50].

The probe and gate light pulses are generated with the fs pulse laser source device, which generally comprises a laser source being configured for creating sequences of pulses with a duration below 1 ps. Preferably, the probe light pulses have a pulse duration below 500 fs, in particular below 200 fs, before the step of irradiating the sample. The short pulse duration advantageously results in a broadband characteristic of the probe light pulses, thus facilitating collecting the sample response as a "molecular fingerprint". The probe light pulses even may have a shorter pulse duration, e. g. down to 50 fs or below or 20 fs or below, i. e. the probe light pulses may have a spectrum that supports pulses as short as 50 or 20 fs or below, respectively. Furthermore, the gate light pulses preferably have a pulse duration being equal to or shorter than an oscillation period of a shortest wavelength contained in the spectral response of the sample to be obtained.

Like with the probe light pulses, the output of the multi color master oscillator can be directly used for providing the gate light pulses as well. Alternatively, according to a further embodiment of the invention, the gate light pulses are generated by subjecting the other one of the first and second laser pulse trains to at least one of a pulse amplification and a temporal compression. Advantageously, this also provides additional degrees of freedom for adjusting the characteristics of the sample light pulses. Again, the pulse amplification and/or temporal compression can be applied to the initial output of the multi color master oscillator by employing a second pulse modification device, in particular a second pulse amplification device and/or a second temporal compression device, resp., using e. g. optically non-linear components and/or linear components, like a grating compressor.

According to a further preferred embodiment of the invention, the electro-optic element of the electro-optic sampling device comprises a crystal of BBO [64], GaSe [54, 61], LGS and GaP, or ZnTe.

Preferably, the electro-optic sampling includes spectral post-filtering. To this end, the electro-optic sampling device includes a filter device being adapted for the spectral post-filtering, which provides advantages for improving the signal-to-noise ratio.

With a further advantageous variant of the invention, at least one of the repetition frequencies $f_{r1}$ and $f_{r2}$ is loop-controlled with reference to a radiofrequency reference signal (RF clock signal). To this end, the fs pulse laser source device is coupled with a control device, preferably a loop control device, being connected with a radiofrequency reference signal source for reference purposes. By employing the RF clock signal, advantages in terms of simple control electronics and high precision and reproducibility of the control of the repetition frequencies are obtained.

Advantageously, the invention can be implemented in practice with a broad variety of sample types. With preferred examples, the sample comprises a gas, a vapor, an aerosol and/or a liquid, particularly preferred of biological origin. The spectroscopic measuring apparatus preferably comprises a sample device being arranged for providing and/or supplying the sample. The sample device may comprise e. g. a nozzle, a spray supply, or a container, like a cuvette.

Features disclosed in the context of the method for measuring a spectral response of a sample and embodiments thereof also represent preferred features of the inventive spectroscopic measuring apparatus and embodiments thereof. The aforementioned aspects and inventive and preferred features, in particular with regard to the configuration of the spectroscopic measuring apparatus as well as the dimensions and compositions of individual components being described in relation to the apparatus, also apply for the methods. The preferred embodiments, variants and features of the invention described above are combinable with one another as desired.

Brief description of the drawings

Further details and advantages of the invention are described in the following with reference to the attached drawings, which schematically show in:

Figure 1: an overview of a spectroscopic measuring apparatus illustrating features of preferred embodiments of the invention;

Figure 2: an experimental result illustrating a noise suppression obtained with a band filter based master oscillator; and

Figure 3: an example of a control device configuration.

Preferred embodiments of the invention

Features of preferred embodiments of the invention are described in the following with particular reference to the creation of the inventive optical delay scan between probe and gate light pulses in field-resolved spectroscopy. Further details of the field-resolved spectroscopy, in particular relating to the preparation and provision of the sample, details of electro-optical sampling, details of signal processing, or details of creating and optionally processing fs laser pulses are not described as far as they are known from prior art.

Generally, the inventive optical spectroscopic method comprises the steps of (i) generating two or more trains of equidistant pulses with different pulse repetition rates within a single femtosecond master oscillator, (ii) using one or more of said trains of pulses (after optional modification steps such as amplification and/or nonlinear temporal compression) to generate a train of waveform-stable optical pulses (e.g., in the infrared spectral region), interacting these waveforms with the sample under scrutiny (e.g., for linear or nonlinear spectroscopy), and (iii) electro-optically sampling the optical waveforms emerging upon this interaction, employing one or more train(s) of gating pulses with different repetition frequency/frequencies, delivered by the master oscillator (including optional modification steps such as amplification and/or nonlinear temporal compression).

According to preferred embodiments of the invention, a fs pulse laser source device generates two laser pulse trains, including a first laser pulse train and a second laser pulse train with different repetition frequencies. In particular for an improved adaptation to the requirements of the spectroscopic measurement and/or for sampling the probe light pulses after the interaction with the sample with different sequences of gate light pulses, the fs pulse laser source device can be configured for emitting more than two, e. g. three, four or more laser pulse trains having different repetition frequencies. In the following, reference is made in an exemplary, non-restricting manner to generating the probe light pulses with the first laser pulse train and generating the gate light pulses with the second laser pulse train.

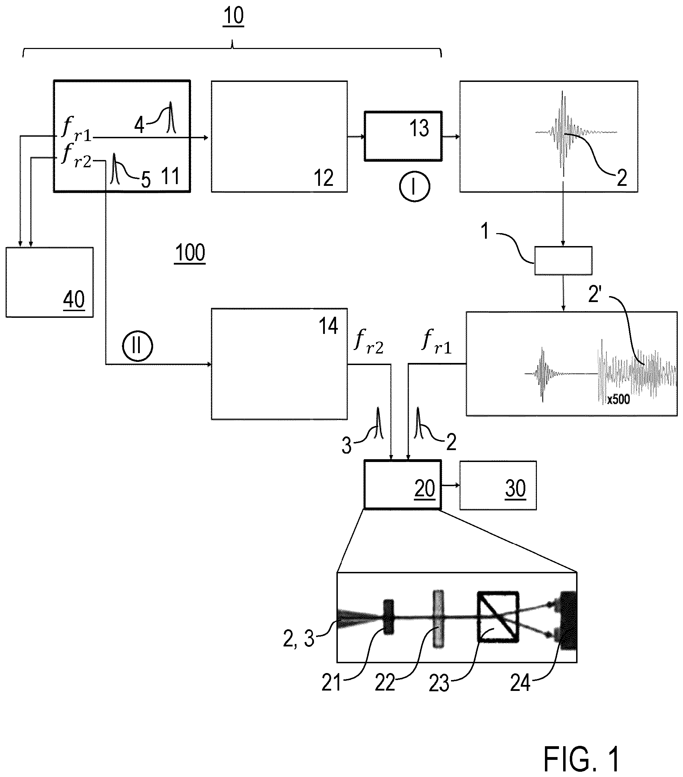

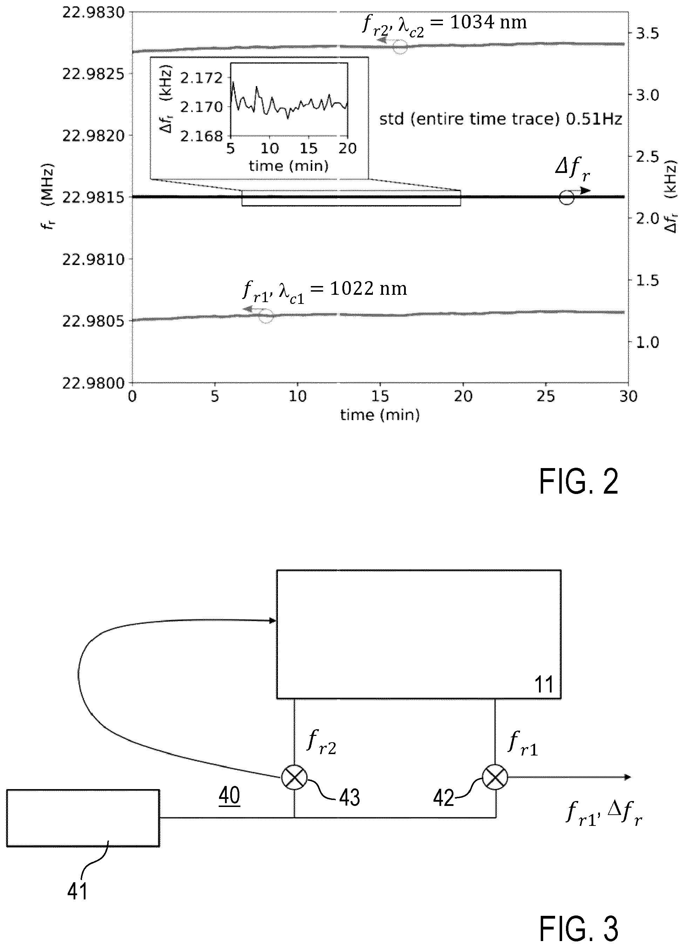

Figure 1 illustrates a schematic overview of a spectroscopic measuring apparatus 100 for measuring a spectral response of a sample 1. The spectroscopic measuring apparatus 100 comprises a fs pulse laser source device 10, a detector device 20, a computing device 30 and a control device 40. Exemplary details of the control device 40, which is adapted for measurement, reference and/or stabilizing purposes, are shown in Figure 3. The spectroscopic measuring apparatus 100 may comprise further components (not shown), which are provided e. g. for monitoring and/or adjusting purposes.

The fs pulse laser source device 10 comprises a multi color master oscillator 11 creating two laser pulse trains 4, 5 having different repetition frequencies $f_{r1}$ and $f_{r2} = f_{r1} \pm \Delta f_r$ with a repetition frequency difference $\Delta f_r$ on the order of 500 Hz up to several tens of kHz. The laser pulse trains 4, 5 are output to separate beam paths I, II for providing the probe and gate light pulses 2, 3. If the master oscillator 11 has a single gain medium, the laser pulse trains 4, 5 are split onto the separate beam paths I, II, e. g. with a beam splitter at an output side of the master oscillator 11 .

For adapting the fs pulse laser source device 10 to different measuring tasks, a repetition frequency difference setting device (not shown) is provided for setting the repetition frequency difference $\Delta f_r$ by adjusting at least one of the repetition frequencies $f_{r1}$ and $f_{r2}$. The repetition frequency difference setting device is connected with the control device 40.

The femtosecond master oscillator 11 can be provided by one of the techniques as summarized above and being disclosed e. g. in [23] to [41]. According to a preferred embodiment of the invention, the master oscillator 11 is a dual-comb laser including a spectral band filter within the oscillator resonator ([66], [38], [38A]). Advantageously, this approach to generate two pulse trains from one laser cavity works for many different laser schemes like fiber lasers (e.g. but not limited to nonlinear polarization evolution lasers, nonlinear amplifying loop mirror lasers, or saturable absorber modelocked lasers), solid-state lasers in various geometries (e.g. but not limited to thin-disk lasers, bulk lasers, semiconductor lasers, slab-lasers) and gain mediums (e.g. but not limited to Er, Ti, Ho, Nd, Pr, Tm). As a further advantage, using the spectral band filter allows to design a dual-comb laser with a tunable spectral separation, a tunable $\Delta f_r$ in the above cited range and an optimized repetition rate for a given application ranging from a few tens of MHz up to over a hundred MHz. Even GHz repetition rates for single-cavity dual-color lasers are feasible.

When using the two pulse trains of the single-cavity dual-color laser for electro-optic sampling, the relative timing jitter (or respectively the relative stability of the repetition rates) of both pulse trains is to be minimized. The drift of $\Delta f_r$ of a single-cavity dual-comb based on a spectral band filter is reduced by one to two orders of magnitude compared to the initial drift of the repetition rates $f_{r1}$ and $f_{r2}$. This advantage provides equally strong timing jitter improvement compared to the current state of the art as illustrated in Figure 2, which shows common noise and more than hundredfold noise reduction in dual-comb operation. This reduction in timing jitter might be further improved by stabilizing either one of the fundamental repetition rates $f_{r1}$ or $f_{r2}$ or the difference in repetition rate $\Delta f_r$.

In the first beam path I, the fs pulse laser source device 10 optionally comprises a first pulse modification device 12, being arranged for subjecting the first pulse train 4 to an amplification and/or a nonlinear temporal compression. As an example, the first pulse modification device 12 comprises a chirped-pulse fiber amplification device, including e. g. an ytterbium [42], erbium [43] or thulium [44] doped fiber. With the chirped-pulse fiber amplification device, a pulse amplification to the Watt level or beyond can be obtained. Self-phase-modulation-based temporal pulse compression can be provided using e. g. solid-core fibers [43, 45, 46], multi-pass bulk compression [47, 48] and gas-filled hollow-core fibers [49].

To obtain a train of powerful, waveform-stable pulses, the pulses resulting from the amplification and/or compression step can be, in examples not falling under the scope of the claims, directly used in conjunction with active phase-stabilization schemes [42, 44]. Alternatively, according to the invention, after the amplification and/or compression step, the resulting pulses drives optical rectification (OR) [50] in a rectification device 13. The rectification device 13 includes an optical nonlinear crystal, e. g. BBO [51], LGS [53], GaSe [54], and/or GaP [56]. Pulse trains generated via OR have spectrally covered the near-infrared [51] (NIR), mid-infrared ([52] to [54]) (MIR) and far-infrared/THz [55] spectral regions, in particular covering the entire spectral range of fundamental and overtone modes of molecular vibrations and rotations.

Optical rectification, also known as intrapulse difference-frequency generation, yields a train of broadband pulses at the original repetition frequency $f_{r1}$, however with nominally identical electric-field waveforms, without the need of active stabilization. Advantageously, recent studies have shown unprecedented waveform stabilities for infrared waveforms generated via OR [57], rendering this method for obtaining a train of waveform-stable pulses at $f_{r1}$ a preferred embodiment of the invention. The waveform-stable broadband pulses obtained by the optical rectification provide the probe light pulses 2 for irradiating the sample 1. At the output side of the rectification device 13, a filter (not shown) can be arranged for separating the probe light pulses 2 from the remaining light from the pulse train 4.

In examples not falling under the scope of the claims, the first pulse modification device 12 and the rectification device 13 can be omitted, if the output of the multi color master oscillator 11 is appropriate for providing the waveform stable probe light pulses 2 for irradiating the sample 1.

The resulting train of waveform-stable probe light pulses 2 is interacted (e.g., in an arrangement of transmission, reflection, transflection and/or attenuated total reflection) with the sample 1 under test. The sample is provided by a sample device (not shown), which may comprise a static sample holder, like a cuvette, a single- or multi-pass gas cell or an enhancement resonator, or a dynamic sample holder, like a jet source or nozzle. Application examples include the analysis of gas and/or vapor and/or aerosol, e. g. of biological origin (e.g., breath analysis, head space of cell cultures, quality control of food etc.) or of environmental samples, and/or the analysis of biofluids and biological systems in their liquid, in particular aqueous, environment (e.g., flow cytometry).

Due to the electromagnetic interaction of the probe light pulses 2 with the sample 1, e. g. by an absorption of spectral components of the probe light pulses 2 and resonant emission of a sample response, the probe light pulses 2 obtain a modified spectrum and temporal shape after the interaction, as schematically illustrated in Figure 1. The modified probe light pulse 2 (sample response) has a pulse shape being determined by the exciting probe light pulse and a pulse trail 2' (shown with an extension factor *500 for illustrative purposes) in the wake of the excitation exciting probe light pulse. The pulse trail 2' is sensed by electro-optical sampling with the detector device 20.

A pulse picker device (not shown) can be arranged in the first beam path I, e. g. between the master oscillator 11 and the first pulse modification device 12. The pulse picker device can be configured, e. g. as described in [42] or [54], for reducing the repetition rate of the first laser pulse train 4, e. g. to $f_{r1}/2$, thus allowing for low-noise lock-in detection at a multi-MHz modulation frequency.

Furthermore, a chopper device (not shown) can be arranged in the first beam path I for an intensity modulation of the probe light pulses 2. The intensity modulation can be employed in a lock-in measuring scheme by the detector device 20 and the computing device 30.

In the second beam path II, the fs pulse laser source device 10 optionally comprises a second pulse modification device 14, being arranged for subjecting the second pulse train 5 to an amplification and/or a nonlinear temporal compression. The second pulse modification device 14 can be configured like the first pulse modification device 12. Amplification and/or temporal compression results in a train of pulses at the second repetition frequency $f_{r2}$, which provide the gate light pulses 3. Importantly, the final duration of the gate light pulses 3 is to be comparable to (or shorter than) the oscillation period of the shortest wavelength contained in the optical signal to be recorded, in particular in the trail 2' of the modified probe pulses (see below).

The modified probe light pulse 2 (sample response) including the pulse trail 2' is superimposed (recombined) with the gate light pulses 3 for a time gated detection of the pulse trail 2' with the detector device. This superposition can be provided with optical elements as known per se, e. g. with an arrangement of mirrors including at least one mirror with a hole, at least one dichroitic reflector and/or at least one Brewster plate.

For temporally resolved detecting the modified probe light pulses 2, the detector device 20 is an electro-optic sampling device, including the electro-optic element 21, like a GaP or GaSe crystal, a quarter wave plate 22, a Wollaston prism 23 and a pair of balanced photodiodes 24 (see insert of Figure 1). The modified probe light pulses 2 and the gate light pulses 3 are superimposed with varying temporal relationship at the electro-optic element 21. The varying temporal relationship is determined by the repetition frequency difference $\Delta f_r$ of the probe and gate light pulses 2, 3, resulting in a periodically varying delay between subsequent pulses of the probe light pulses 2 and subsequent pulses of the gate light pulses 3. The time trace of the amplitude of the probe light pulses 2 is detected with the balanced photodiodes 24, sensing a polarization response of the electro-optic element 21 to the currently superimposed probe and gate light pulses 2, 3.

The detector device 20 is coupled with the computing device 30 being arranged for data acquisition and processing for obtaining the spectral response of the sample 1 from the temporal shape of the modified probe light pulses 2. The configuration and operation of the electro-optic sampling device is provided as it is known from conventional field-resolved spectroscopy.

As in conventional electro-optic sampling, the spectrum is recorded with the balanced photodiodes 24 and a time-trace is recorded. The complete spectral and temporal response up to the time $1/\Delta f_r$ is recorded within this time trace. In conventional electro-optic sampling the temporal resolution is given by the minimal step-size of the mechanical delay line $\Delta l$ which corresponds to $\Delta \tau = c/\Delta l$. With the inventive technique, the temporal resolution $\Delta \tau$ is given by

$$\Delta \tau = \frac{\Delta f_r}{f_{r1} f_{r2}}$$

which can be precisely defined by the involved frequencies. Typical values for $\Delta \tau$ will be on the order of several tens of fs up to several ps.

In particular, all involved frequencies are in the RF-range and can be referenced and/or locked to a stable clock signal. An example of stabilizing the repetition frequencies $f_{r1}$ and $f_{r2}$ by employing the control device 40 (see Figure 1) is depicted in Figure 3. The control device 40 comprises a reference signal source 41, which provides an RF clock signal (RF reference). Furthermore, the control device 40 comprises first and second frequency summing units 42, 43, which are arranged for creating beating signals from the superposition of the RF clock signal frequency with the repetition frequencies $f_{r1}$ and $f_{r2}$ of the first and second laser pulse trains 4, 5, resp..

The output of the first frequency summing unit 42 is coupled with the computing device 30. The time-trace of the beating signal from the RF clock signal frequency with the repetition frequency $f_{r1}$ can be used to interleave the measured response, in particular the output of the balanced photodiodes 24, and improve the statistics for data acquisition. The output of the frequency summing unit 43 is coupled with the master oscillator 11 for feedback controlling the repetition frequency $f_{r2}$ of the second laser pulse train 5.

Alternatively, the EOS signal can be recorded for each individual shot during the entire measurement. Post-processing the time-domain data can include a Fourier transformation, yielding the spectral amplitude and phase of the sample response. In case of a sample response identically repeating for a constant excitation field, the frequency-comb structure of the train of probe light pulses 2 is transferred to the sample response. In the frequency domain, the waveform stability of the probe light pulses 2 interacting with the sample 1 with a frequency of $f_{r1}$ implies that the comb offset frequency equals 0 Hz, resulting in a simplified parametrization of each frequency comb mode: $f_N = Nf_{r1}$. Stabilization/referencing or monitoring of $Nf_{r1}$ and $\Delta f_r$ can therefore allow for an absolute and precise calibration of the frequency axis.

Advantageously, the inventive method minimizes the number of active control loops and increases the passive stability of the system. The relative timing jitter between the probe and gate light pulses is reduced by a factor of 10-100 compared to current state of the art systems. The outlined system offers flexibility in the adjustment of the time resolution and does not require any moving parts, which further increases the stability and precision of the field-resolved spectrometer.

The invention is defined in the appended claims.

**Claims**

1. Method of measuring a spectral response of a sample (1), comprising the steps:

    - generating probe light pulses (2) having a primary spectrum with a fs pulse laser source device (10),
    - generating gate light pulses (3) with the fs pulse laser source device (10), wherein the gate light pulses (3) have an adjustable temporal relationship relative to the probe light pulses (2),
    - irradiating the sample (1) with the probe light pulses (2), including an interaction of the probe light pulses (2) and the sample (1), and
    - temporally resolved detecting of the probe light pulses (2) having a modified spectrum, which deviates from the primary spectrum as a result of the interaction of the probe light and the sample (1), said modified spectrum being characteristic of the spectral response of the sample (1), wherein
    - the detecting step comprises electro-optic sampling a temporal shape of the probe light pulses (2) after the interaction with the sample (1), wherein the probe light pulses (2) and the gate light pulses (3) are superimposed with varying temporal relationship in an electro-optic element (21) for sampling the temporal shape of the probe light pulses (2), and
    - the spectral response of the sample (1) is obtained based on the temporal shape of the probe light pulses (2),

**characterized in that**

- the fs pulse laser source device (10) comprises a multi color master oscillator (11) including at least one gain medium and generating a first laser pulse train (4) and a second laser pulse train (5), which have different repetition frequencies $f_{r1}$ and $f_{r2} = f_{r1} \pm \Delta f_r$ with a repetition frequency difference $\Delta f_r$, wherein

- the probe light pulses (2) are generated using the first laser pulse train (4) and the gate light pulses (3) are generated using the second laser pulse train (5),

- the probe light pulses (2) are generated by driving an optical rectification in an optically non-linear crystal by the first laser pulse train (4), and

- the temporal relationship of the gate light pulses (3) relative to the probe light pulses (2) is adjusted by setting the repetition frequency difference $\Delta f_r$.

2. Method according to claim 1, wherein

   - the repetition frequencies $f_{r1}$ and $f_{r2}$ are set in a range from 10 MHz to 10 GHz, and
   - the repetition frequency difference $\Delta f_r$ is set in a range from 10 Hz up to 100 kHz.

3. Method according to one of the foregoing claims, wherein

   - the at least one gain medium is coupled with two spectral band filters being matched to two different spectral emission lines of the at least one gain medium.

4. Method according to one of the foregoing claims, including at least one of the features

   - the multi color master oscillator (11) includes a fiber laser or a solid-state laser, wherein the at least one gain medium includes at least one of Er, Ti, Ho, Nd, Pr, Cr, Yb and Tm,
   - the probe light pulses (2) have a pulse duration below 500 fs, in particular below 200 fs, before the step of irradiating the sample (1),
   - the gate light pulses (3) have a pulse duration being equal to or shorter than an oscillation period of a shortest wavelength contained in the spectral response of the sample (1) to be obtained,
   - the repetition frequencies $f_{r1}$ and $f_{r2}$ are loop-controlled with reference to a radiofrequency reference signal, and
   - the probe light pulses (2) are generated by subjecting the first laser pulse train (4) to at least one of a pulse amplification and a temporal compression.

5. Method according to one of the foregoing claims, wherein

   - the probe light pulses (2) are generated by subjecting the first laser pulse train (4) to chirped-pulse fiber amplification to a power equal to or above 50 mW, in particular above 500 mW.

6. Method according to one of the foregoing claims, wherein

   - the gate light pulses (3) are generated by subjecting the second laser pulse train (5) to at least one of a pulse amplification and a temporal compression.

7. Method according to one of the foregoing claims, including at least one of the features

   - the electro-optic element (21) comprises a crystal of BBO, GaSe, LGS and GaP, or ZnTe,

      - the electro-optic sampling includes spectral post-filtering,

   - the sample (1) comprises at least one of a gas, a vapor, an aerosol and a liquid, in particular of biological origin.

8. Spectroscopic measuring apparatus (100) being configured for measuring a spectral response of a sample (1), comprising

   - a fs pulse laser source device (10) being arranged for generating probe light pulses (2) having a primary spectrum and for generating gate light pulses (3), wherein the gate light pulses (3) have an adjustable temporal relationship relative to the probe light pulses (2), wherein the fs pulse laser source device (10) is arranged for irradiating the sample (1) with the probe light pulses (2), including an interaction of the probe light pulses (2) and the sample (1), and

   - a detector device (20) being arranged for temporally resolved detecting of the probe light pulses (2) having a modified spectrum, which deviates from the primary spectrum as a result of the interaction of the probe light and the sample (1), said modified spectrum being characteristic of the spectral response of the sample (1), wherein

   - the detector device (20) is an electro-optic sampling device including an electro-optic element (21), wherein the electro-optic sampling device is configured for electro-optic sampling a temporal shape of the probe light pulses (2) after the interaction with the sample (1) and the electro-optic element (21) is arranged for superimposing the probe light pulses (2) and the gate light pulses (3) with varying temporal relationship for sampling the temporal shape of the probe light pulses (2), and
- the detector device (20) is coupled with a computing device (30) being arranged for obtaining the spectral response of the sample (1) based on the temporal shape of the probe light pulses (2), **characterized in that**
- the fs pulse laser source device (10) comprises a multi color master oscillator (11) including at least one gain medium and being adapted for generating a first laser pulse train (4) and a second laser pulse train (5), which have different repetition frequencies $f_{r1}$ and $f_{r2} = f_{r1} \pm \Delta f_r$ with a repetition frequency difference $\Delta f_r$, wherein
- the fs pulse laser source device (10) is configured for generating the probe light pulses (2) using the first laser pulse train (4) and for generating the gate light pulses (3) using the second laser pulse train (5),
- the fs pulse laser source device (10) comprises a rectification device (13) including an optically non-linear crystal being arranged for generating the probe light pulses (2) by driving an optical rectification by the first laser pulse train (4), and
- the fs pulse laser source device (10) includes a repetition frequency difference setting device being arranged for adjusting the temporal relationship of the gate light pulses (3) relative to the probe light pulses (2) by setting the repetition frequency difference $\Delta f_r$.

9. Spectroscopic measuring apparatus according to claim 8, wherein

   - the fs pulse laser source device (10) is adapted for setting the repetition frequencies $f_{r1}$ and $f_{r2}$ in a range from 10 MHz to 10 GHz and the repetition frequency difference $\Delta f_r$ in a range from 10 Hz up to 100 kHz.

10. Spectroscopic measuring apparatus according to one of the claims 8 to 9, wherein

    - the at least one gain medium is coupled with two spectral band filters being matched to two different spectral emission lines of the at least one gain medium.

11. Spectroscopic measuring apparatus according to one of the claims 8 to 10, wherein

    - the multi color master oscillator (11) includes a fiber laser or a solid-state laser and the at least one gain medium includes at least one of Er, Ti, Ho, Nd, Pr, Cr, Yb and Tm.

12. Spectroscopic measuring apparatus according to one of the claims 8 to 11, wherein

    - the first pulse modification device (12) comprises a chirped-pulse fiber amplification device being arranged for generating the probe light pulses (2) with a power equal to or above 50 mW, in particular above 500 mW.

13. Spectroscopic measuring apparatus according to one of the claims 8 to 12, further including at least one of

    - a first pulse modification device (12), in particular at least one of a first pulse amplification device and a first temporal compression device, being arranged for generating the probe light pulses (2),
    - a second pulse modification device (14), in particular at least one of a second pulse amplification device and a second temporal compression device, being arranged for generating the gate light pulses (3),
    - a control device (40) being arranged for controlling the repetition frequencies $f_{r1}$ and $f_{r2}$ with reference to a radiofrequency reference signal.

14. Spectroscopic measuring apparatus according to one of the claims 8 to 13, wherein

    - the electro-optic element (21) comprises a crystal of BBO, GaSe, LGS, GaP, or ZnTe, and/or
    - the electro-optic sampling device is adapted for spectral post-filtering.

**Patentansprüche**

1. Verfahren zum Messen einer Spektralantwort einer Probe (1), umfassend die Schritte:

   - Erzeugung von Sondenlichtpulsen (2) mit einem Primärspektrum mit einer fs-Pulslaserquelleneinrichtung (10),
   - Erzeugung von Gate-Lichtpulsen (3) mit der fs-Pulslaserquelleneinrichtung (10), wobei die Gate-Lichtpulse (3) eine einstellbare zeitliche Beziehung relativ zu den Sondenlichtpulsen (2) haben,
   - Bestrahlung der Probe (1) mit den Sondenlichtpulsen (2), einschließlich einer Wechselwirkung der Sondenlichtpulse (2) und der Probe (1), und
   - zeitaufgelöste Detektion der Sondenlichtpulse (2) mit einem modifizierten Spektrum, das aufgrund der Wechselwirkung des Sondenlichts mit der Probe (1) vom Primärspektrum abweicht, wobei das modifizierte Spektrum für die Spektralantwort der Probe (1) charakteristisch ist, wobei

- der Detektionsschritt das elektrooptische Abtasten einer zeitlichen Form der Sondenlichtpulse (2) nach der Wechselwirkung mit der Probe (1) umfasst, wobei die Sondenlichtpulse (2) und die Gate-Lichtpulse (3) mit variierender zeitlicher Beziehung in einem elektrooptischen Element (21) zum Abtasten der zeitlichen Form der Sondenlichtpulse (2) überlagert werden, und

- die Spektralantwort der Probe (1) basierend auf der zeitlichen Form der Sondenlichtpulse (2) erhalten wird,

**dadurch gekennzeichnet, dass**

- die fs-Pulslaserquelleneinrichtung (10) einen Mehrfarben-Masteroszillator (11) umfasst, der mindestens ein Verstärkungsmedium enthält und eine erste Laserpulsfolge (4) und eine zweite Laserpulsfolge (5) erzeugt, die unterschiedliche Wiederholfrequenzen $f_{r1}$ and $f_{r2} = f_{r1} \pm \Delta f_r$ mit einer Wiederholungsfrequenzdifferenz $\Delta f_r$ aufweisen, wobei

- die Sondenlichtpulse (2) unter Verwendung der ersten Laserpulsfolge (4) erzeugt werden und die Gate-Lichtpulse (3) unter Verwendung der zweiten Laserpulsfolge (5) erzeugt werden,

- die Sondenlichtpulse (2) durch Treiben einer optischen Gleichrichtung in einem optisch nichtlinearen Kristall durch die erste Laserpulsfolge (4) erzeugt werden, und

- die zeitliche Beziehung der Gate-Lichtpulse (3) zu den Sondenlichtpulsen (2) durch Einstellen der Wiederholungsfrequenzdifferenz $\Delta f_r$ eingestellt wird.

2. Verfahren nach Anspruch 1, wobei

- die Wiederholfrequenzen $f_{r1}$ und $f_{r2}$ in einem Bereich von 10 MHz bis 10 GHz eingestellt werden und

- die Wiederholungsfrequenzdifferenz $\Delta f_r$ in einem Bereich von 10 Hz bis zu 100 kHz eingestellt wird.

3. Verfahren nach einem der vorhergehenden Ansprüche, wobei

- das mindestens eine Verstärkungsmedium mit zwei Spektralbandfiltern gekoppelt ist, die auf zwei verschiedene Spektralemissionslinien des mindestens einen Verstärkungsmediums angepasst sind.

4. Verfahren nach einem der vorhergehenden Ansprüche, das mindestens eines der Merkmale umfasst

- der Mehrfarben-Masteroszillator (11) umfasst einen Faserlaser oder einen Festkörperlaser, wobei das mindestens eine Verstärkungsmedium mindestens eines von Er, Ti, Ho, Nd, Pr, Cr, Yb und Tm umfasst,

- die Sondenlichtpulse (2) weist vor dem Schritt der Bestrahlung der Probe (1) eine Pulsdauer von weniger als 500 fs, insbesondere weniger als 200 fs, auf,

- die Gate-Lichtpulse (3) haben eine Pulsdauer, die gleich oder kürzer ist als eine Schwingungsperiode einer kürzesten Wellenlänge, die in der zu ermittelnden Spektralantwort der Probe (1) enthalten ist,

- die Wiederholfrequenzen $f_{r1}$ und $f_{r2}$ sind unter Bezugnahme auf ein Hochfrequenz-Referenzsignal regelkreisgesteuert, und

- die Sondenlichtpulse (2) werden erzeugt, indem die erste Laserpulsfolge (4) mindestens einer Pulsverstärkung und/oder einer zeitlichen Kompression unterzogen wird.

5. Verfahren nach einem der vorhergehenden Ansprüche, wobei

- die Sondenlichtpulse (2) erzeugt werden, indem die erste Laserpulsfolge (4) einer Chirp-Puls-Faser-Verstärkung mit einer Leistung von mindestens 50 mW, insbesondere von mehr als 500 mW, beaufschlagt wird.

6. Verfahren nach einem der vorhergehenden Ansprüche, wobei

- die Gate-Lichtpulse (3) erzeugt werden, indem die zweite Laserpulsfolge (5) mindestens einer Pulsverstärkung und/oder einer zeitlichen Kompression unterzogen wird.

7. Verfahren nach einem der vorhergehenden Ansprüche, das mindestens eines der Merkmale umfasst

- das elektrooptische Element (21) umfasst einen Kristall aus BBO, GaSe, LGS und GaP oder ZnTe,

- das elektrooptische Abtasten enthält eine spektrale Nachfilterung,

- die Probe (1) umfasst mindestens eines von Gas, Dampf, Aerosol und Flüssigkeit, insbesondere biologischen Ursprungs.

8. Spektroskopische Messvorrichtung (100), die zum Messen einer Spektralantwort einer Probe (1) konfiguriert ist, umfassend

- eine fs-Pulslaserquelleneinrichtung (10), die zur Erzeugung von Sondenlichtpulsen (2) mit einem Primärspektrum und zur Erzeugung von Gate-Lichtpulsen (3) angeordnet ist, wobei die Gate-Lichtpulse (3) eine einstellbare zeitliche Beziehung relativ zu den Sondenlichtpulsen (2) aufweisen, wobei die fs-Pulslaserquelleneinrichtung (10) zur Bestrahlung der Probe (1) mit den Sondenlichtpulsen (2), einschließend eine Wechselwirkung der Sondenlichtpulse (2) mit der Probe (1) angeordnet ist, und

- eine Detektoreinrichtung (20) zur zeitaufgelösten Detektion der Sondenlichtpulse (2) mit einem modifizierten Spektrum, das aufgrund der Wechselwirkung des Sondenlichts mit der Probe (1) vom Primärspektrum abweicht, wobei das modifizierte Spektrum für die Spektralantwort der Probe (1) charakteristisch ist, wobei

- die Detektoreinrichtung (20) eine elektrooptische Abtasteinrichtung umfasst, die ein elektrooptisches Element (21) enthält, wobei die elektrooptische Abtasteinrichtung zum elektrooptischen Abtasten einer zeitlichen Form der Sondenlichtpulse (2) nach der Wechselwirkung mit der Probe (1) konfiguriert ist und das elektrooptische Element (21) zur Überlagerung der Sondenlichtpulse (2) und der Gate-Lichtpulse (3) mit variierender zeitlicher Beziehung zum Abtasten der zeitlichen Form der Sondenlichtpulse (2) angeordnet ist, und

- die Detektoreinrichtung (20) mit einer Recheneinrichtung (30) gekoppelt ist, die zum Erhalten der Spektralantwort der Probe (1) basierend auf der zeitlichen Form der Sondenlichtpulse (2) angeordnet ist,

**dadurch gekennzeichnet, dass**

- die fs-Pulslaserquelleneinrichtung (10) einen Mehrfarben-Masteroszillator (11) umfasst, der mindestens ein Verstärkungsmedium enthält und zur Erzeugung einer ersten Laserpulsfolge (4) und einer zweiten Laserpulsfolge (5) eingerichtet ist, die unterschiedliche Wiederholfrequenzen $f_{r1}$ und $f_{r2} = f_{r1} \pm \Delta f_r$ eine Wiederholungsfrequenzdifferenz $\Delta f_r$ aufweisen, wobei

- die fs-Pulslaserquelleneinrichtung (10) zur Erzeugung der Sondenlichtpulse (2) unter Verwendung der ersten Laserpulsfolge (4) und der Gate-Lichtpulse (3) unter Verwendung der zweiten Laserpulsfolge (5) eingerichtet ist,

- die fs-Pulslaserquelleneinrichtung (10) eine Gleichrichtungsvorrichtung (13) umfasst, die einen optisch nichtlinearen Kristall enthält, der zur Erzeugung der Sondenlichtpulse (2) durch Treiben einer optischen Gleichrichtung durch die erste Laserpulsfolge (4) angeordnet ist, und

die fs-Pulslaserquelleneinrichtung (10) eine Wiederholungsfrequenzdifferenz-Einstellvorrichtung umfasst, die zum Anpassen der zeitlichen Beziehung der Gate-Lichtpulse (3) relativ zu den Sondenlichtpulsen (2) durch Einstellen der Wiederholungsfre-

quenzdifferenz $\Delta f_r$ angeordnet ist.

9. Spektroskopische Messvorrichtung nach Anspruch 8, wobei

   - die fs-Pulslaserquelleneinrichtung (10) zum Einstellen der Wiederholfrequenzen $f_{r1}$ und $f_{r2}$ in einem Bereich von 10 MHz bis 10 GHz und die Wiederholungsfrequenzdifferenz $\Delta f_r$ in einem Bereich von 10 Hz bis 100 kHz eingerichtet ist.

10. Spektroskopische Messvorrichtung nach einem der Ansprüche 8 bis 9, wobei

    - das mindestens eine Verstärkungsmedium mit zwei Spektralbandfiltern gekoppelt ist, die an zwei verschiedene Spektralemissionslinien des mindestens einen Verstärkungsmediums angepasst sind.

11. Spektroskopische Messvorrichtung nach einem der Ansprüche 8 bis 10, wobei

    - der Mehrfarben-Masteroszillator (11) einen Faserlaser oder einen Festkörperlaser umfasst und das mindestens eine Verstärkungsmedium mindestens eines von Er, Ti, Ho, Nd, Pr, Cr, Yb und Tm umfasst.

12. Spektroskopische Messvorrichtung nach einem der Ansprüche 8 bis 11, wobei

    - die erste Pulsmodifikationsvorrichtung (12) eine Chirp-Puls-Faser-Verstärkung umfasst, die zur Erzeugung der Sondenlichtpulse (2) mit einer Leistung von mindestens 50 mW, insbesondere über 500 mW, angeordnet ist.

13. Spektroskopische Messvorrichtung nach einem der Ansprüche 8 bis 12, die ferner mindestens eines der folgenden Elemente umfasst

    - eine erste Pulsmodifikationseinrichtung (12), insbesondere mindestens eine von einer ersten Pulsverstärkungseinrichtung und einer ersten Zeitliche-Kompressionseinrichtung, die zum Erzeugung der Sondenlichtpulse (2) angeordnet ist,

    - eine zweite Pulsmodifikationsvorrichtung (14), insbesondere mindestens eine von einer zweiten Pulsverstärkungseinrichtung und einer zweiten Zeitliche-Kompressionseinrichtung, die zur Erzeugung der Gate-Lichtpulse (3) eingerichtet ist,

    - eine Steuereinrichtung (40), die zur Steuerung der Wiederholfrequenzen $f_{r1}$ und $f_{r2}$ unter Bezugnahme auf ein Hochfrequenz-Referenzsignal eingerichtet ist.

**14.** Spektroskopische Messvorrichtung nach einem der Ansprüche 8 bis 13, wobei

> - das elektrooptische Element (21) einen Kristall aus BBO, GaSe, LGS, GaP oder ZnTe umfasst und/oder
> - die elektrooptische Abtasteinrichtung für eine spektrale Nachfilterung ausgelegt ist.

**Revendications**

**1.** Procédé de mesure d'une réponse spectrale d'un échantillon (1), comprenant les étapes :

> - de génération d'impulsions lumineuses de sonde (2) ayant un spectre primaire avec un dispositif de source laser à impulsions fs (10),
> - de génération d'impulsions lumineuses de grille (3) avec le dispositif de source laser à impulsions fs (10), dans lequel les impulsions lumineuses de grille (3) ont une relation temporelle ajustable par rapport aux impulsions lumineuses de sonde (2),
> - d'irradiation de l'échantillon (1) avec les impulsions lumineuses de sonde (2), incluant une interaction des impulsions lumineuses de sonde (2) et de l'échantillon (1), et
> - de détection résolue dans le temps des impulsions lumineuses de sonde (2) ayant un spectre modifié, qui s'écarte du spectre primaire en raison de l'interaction de la lumière de sonde et de l'échantillon (1), ledit spectre modifié étant caractéristique de la réponse spectrale de l'échantillon (1), dans lequel
> - l'étape de détection comprend un échantillonnage électro-optique d'une forme temporelle des impulsions lumineuses de sonde (2) après l'interaction avec l'échantillon (1), dans lequel les impulsions lumineuses de sonde (2) et les impulsions lumineuses de grille (3) sont superposées avec une relation temporelle variable dans un élément électro-optique (21) pour échantillonner la forme temporelle des impulsions lumineuses de sonde (2), et
> - la réponse spectrale de l'échantillon (1) est obtenue en fonction de la forme temporelle des impulsions lumineuses de sonde (2), **caractérisé en ce que**
> - le dispositif de source laser à impulsions fs (10) comprend un oscillateur maître multicolore (11) incluant au moins un milieu amplificateur et générant un premier train d'impulsions laser (4) et un second train d'impulsions laser (5), qui ont des fréquences de répétition $f_{r1}$ et $f_{r2} = f_{r1} \pm \Delta f_r$ différentes, avec une différence de fréquence de répétition $\Delta f_r$, dans lequel
> - les impulsions lumineuses de sonde (2) sont générées à l'aide du premier train d'impulsions laser (4) et les impulsions lumineuses de grille (3) sont générées à l'aide du second train d'impulsions laser (5),
> - les impulsions lumineuses de sonde (2) sont générées par entraînement d'une rectification optique dans un cristal optiquement non linéaire par le premier train d'impulsions laser (4), et
> - la relation temporelle des impulsions lumineuses de grille (3) par rapport aux impulsions lumineuses de sonde (2) est ajustée par réglage de la différence de fréquence de répétition $\Delta f_r$.

**2.** Procédé selon la revendication 1, dans lequel

> - les fréquences de répétition $f_{r1}$ et $f_{r2}$ sont réglées dans une plage de 10 MHz à 10 GHz, et
> - la différence de fréquence de répétition $\Delta f_r$ est réglée dans une plage de 10 Hz à 100 kHz.

**3.** Procédé selon l'une des revendications précédentes, dans lequel

> - le au moins un milieu amplificateur est couplé à deux filtres de bande spectrale appariés à deux lignes d'émission spectrale différentes du au moins un milieu amplificateur.

**4.** Procédé selon l'une des revendications précédentes, incluant au moins l'une des caractéristiques

> - l'oscillateur maître multicolore (11) inclut un laser à fibre ou un laser à solide, dans lequel le au moins un milieu amplificateur inclut au moins l'un de Er, Ti, Ho, Nd, Pr, Cr, Yb et Tm,
> - les impulsions lumineuses de sonde (2) ont une durée d'impulsion inférieure à 500 fs, en particulier inférieure à 200 fs, avant l'étape d'irradiation de l'échantillon (1),
> - les impulsions lumineuses de grille (3) ont une durée d'impulsion égale ou inférieure à une période d'oscillation d'une longueur d'onde la plus courte contenue dans la réponse spectrale de l'échantillon (1) à obtenir,
> - les fréquences de répétition $f_{r1}$ et $f_{r2}$ sont commandées en boucle par rapport à un signal de référence radiofréquence, et
> - les impulsions lumineuses de sonde (2) sont générées par soumission du premier train d'impulsions laser (4) à au moins l'une d'une amplification d'impulsion et d'une compression temporelle.

**5.** Procédé selon l'une des revendications précédentes, dans lequel

> - les impulsions lumineuses de sonde (2) sont générées par soumission du premier train d'impulsions laser (4) à une amplification à fibre à impulsions à dérive de fréquence à une puissance égale ou supérieure à 50 mW, en particulier supérieure à 500 mW.

6. Procédé selon l'une des revendications précédentes, dans lequel

- les impulsions lumineuses de grille (3) sont générées par soumission du second train d'impulsions laser (5) à au moins l'une d'une amplification d'impulsion et d'une compression temporelle.

7. Procédé selon l'une des revendications précédentes, incluant au moins l'une des caractéristiques

- l'élément électro-optique (21) comprend un cristal de BBO, GaSe, LGS et GaP, ou ZnTe,
- l'échantillonnage électro-optique inclut un post-filtrage spectral,
- l'échantillon (1) comprend au moins l'un d'un gaz, d'une vapeur, d'un aérosol et d'un liquide, en particulier d'origine biologique.

8. Appareil de mesure spectroscopique (100) configuré pour mesurer une réponse spectrale d'un échantillon (1), comprenant

- un dispositif de source laser à impulsions fs (10) agencé pour générer des impulsions lumineuses de sonde (2) ayant un spectre primaire et pour générer des impulsions lumineuses de grille (3), dans lequel les impulsions lumineuses de grille (3) ont une relation temporelle ajustable par rapport aux impulsions lumineuses de sonde (2), dans lequel le dispositif de source laser à impulsions fs (10) est agencé pour irradier l'échantillon (1) avec les impulsions lumineuses de sonde (2), incluant une interaction des impulsions lumineuses de sonde (2) et de l'échantillon (1), et
- un dispositif de détection (20) agencé pour la détection à résolution temporelle des impulsions lumineuses de sonde (2) ayant un spectre modifié, qui s'écarte du spectre primaire en raison de l'interaction de la lumière de sonde et de l'échantillon (1), ledit spectre modifié étant caractéristique de la réponse spectrale de l'échantillon (1), dans lequel
- le dispositif de détection (20) est un dispositif d'échantillonnage électro-optique incluant un élément électro-optique (21), dans lequel le dispositif d'échantillonnage électro-optique est configuré pour l'échantillonnage électro-optique d'une forme temporelle des impulsions lumineuses de sonde (2) après l'interaction avec l'échantillon (1) et l'élément électro-optique (21) est agencé pour superposer les impulsions lumineuses de sonde (2) et les impulsions lumineuses de grille (3) avec une relation temporelle variable pour échantillonner la forme temporelle des impulsions lumineuses de sonde (2), et
- le dispositif de détection (20) est couplé à un dispositif de calcul (30) agencé pour obtenir la réponse spectrale de l'échantillon (1) en fonction de la forme temporelle des impulsions lumineuses de sonde (2),
**caractérisé en ce que**
- le dispositif de source laser à impulsions fs (10) comprend un oscillateur maître multicolore (11) incluant au moins un moyen amplificateur et adapté pour générer un premier train d'impulsions laser (4) et un second train d'impulsions laser (5), qui ont des fréquences de répétition $f_{r1}$ et $f_{r2} = f_{r1} \pm \Delta f_r$ différentes avec une différence de fréquence de répétition $\Delta f_r$, dans lequel
- le dispositif de source laser à impulsions fs (10) est configuré pour générer les impulsions lumineuses de sonde (2) à l'aide du premier train d'impulsions laser (4) et pour générer les impulsions lumineuses de grille (3) à l'aide du second train d'impulsions laser (5),
- le dispositif de source laser à impulsions fs (10) comprend un dispositif de rectification (13) incluant un cristal optiquement non linéaire agencé pour générer les impulsions lumineuses de sonde (2) par entraînement d'une rectification optique par le premier train d'impulsions laser (4), et
- le dispositif de source laser à impulsions fs (10) inclut un dispositif de réglage de différence de fréquence de répétition agencé pour ajuster la relation temporelle des impulsions lumineuses de grille (3) par rapport aux impulsions lumineuses de sonde (2) par réglage de la différence de fréquence de répétition $\Delta f_r$.

9. Appareil de mesure spectroscopique selon la revendication 8, dans lequel

- le dispositif de source laser à impulsions fs (10) est adapté pour régler les fréquences de répétition $f_{r1}$ et $f_{r2}$ dans une plage de 10 MHz à 10 GHz et la différence de fréquence de répétition $\Delta f_r$ dans une plage de 10 Hz à 100 kHz.

10. Appareil de mesure spectroscopique selon l'une des revendications 8 et 9, dans lequel

- le au moins un milieu amplificateur est couplé à deux filtres de bande spectrale appariés à deux lignes d'émission spectrale différentes du au moins un milieu amplificateur.

11. Appareil de mesure spectroscopique selon l'une des revendications 8 à 10, dans lequel

- l'oscillateur maître multicolore (11) inclut un laser à fibre ou un laser à solide et le au moins un milieu amplificateur inclut au moins l'un de Er, Ti, Ho, Nd, Pr, Cr, Yb et Tm.

12. Appareil de mesure spectroscopique selon l'une des revendications 8 à 11, dans lequel

- le premier dispositif de modification d'impulsions (12) comprend un dispositif d'amplification à fibre à impulsions à dérive de fréquence agencé pour générer les impulsions lumineuses de sonde (2) avec une puissance égale ou supérieure à 50 mW, et en particulier supérieure à 500 mW.

13. Appareil de mesure spectroscopique selon l'une des revendications 8 à 12, incluant en outre au moins l'un de

- un premier dispositif de modification d'impulsions (12), en particulier au moins l'un d'un premier dispositif d'amplification d'impulsions et d'un premier dispositif de compression temporelle, agencé pour générer les impulsions lumineuses de sonde (2),
- un second dispositif de modification d'impulsion (14), en particulier au moins l'un d'un second dispositif d'amplification d'impulsion et d'un second dispositif de compression temporelle, agencé pour générer les impulsions lumineuses de grille (3),
- un dispositif de commande (40) agencé pour commander les fréquences de répétition $f_{r1}$ et $f_{r2}$ par rapport à un signal de référence radiofréquence.

14. Appareil de mesure spectroscopique selon l'une des revendications 8 à 13, dans lequel

- l'élément électro-optique (21) comprend un cristal de BBO, GaSe, LGS, GaP, ou ZnTe, et/ou
- le dispositif d'échantillonnage électro-optique est adapté pour le post-filtrage spectral.

FIG. 1

FIG. 2

FIG. 3

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- US 2019280450 A1

## Non-patent literature cited in the description

- **HAUS, H. A.** ; **FUJIMOTO, J. G.** ; **IPPEN, E. P.** Structures for additive pulse mode locking.. *J. Opt. Soc. Am. B*, 1991, vol. 8, 2068
- **ZEWAIL, A. H.** Femtochemistry: Atomic-Scale Dynamics of the Chemical Bond.. *The Journal of Physical Chemistry A*, 2000, vol. 104, 5660-5694
- **REICHERT, J.** ; **HOLZWARTH, R** ; **UDEM, T.** ; **HKSCH, T. W.** Measuring the frequency of light with mode-locked lasers. *Optics Communications*, 1999, vol. 172, 59-68
- **TELLE, H. R. et al.** Carrier-envelope offset phase control: A novel concept for absolute optical frequency measurement and ultrashort pulse generation.. *Appl Phys B*, 1999, vol. 69, 327-332
- **APOLONSKI, A. et al.** Controlling the Phase Evolution of Few-Cycle Light Pulses.. *Phys. Rev. Lett*, 2000, vol. 85, 740-743
- **JONES, D. J.** Carrier-Envelope Phase Control of Femtosecond Mode-Locked Lasers and Direct Optical Frequency Synthesis. *Science*, 2000, vol. 288, 635-639
- **KRAUSZ, F.** ; **IVANOV, M.** Attosecond physics.. *Reviews of Modern Physics*, 2009, vol. 81, 163-234
- **UDEM, T** ; **HOLZWARTH, R** ; **HÄNSCH, T. W.** Optical frequency metrology.. *Nature*, 2002, vol. 416, 5
- **YE, J.** ; **CUNDIFF, S. T.** Femtosecond optical frequency comb: principle, operation, and applications. Springer, 2005
- **GRIFFITHS, P. R** ; **DE HASETH**. J. A. Fourier transform infrared spectrometry.. Wiley-Interscience, 2007
- **KEILMANN, F** ; **GOHLE, C.** ; **HOLZWARTH, R.** Time-domain mid-infrared frequency-comb spectrometer.. *Optics Letters*, 2004, vol. 29, 1542
- **BERNHARDT, B. et al.** Cavity-enhanced dual-comb spectroscopy.. *Nature Photonics*, 2010, vol. 4, 55-57
- **CODDINGTON, I** ; **SWANN, W.** ; **NEWBURY, N.** Coherent Multiheterodyne Spectroscopy Using Stabilized Optical Frequency Combs.. *Physical Review Letters*, 2008, vol. 100
- **NEWBURY, N. R** ; **CODDINGTON, I.** ; **SWANN, W.** Sensitivity of coherent dual-comb spectroscopy.. *Optics Express*, 2010, vol. 18, 7929
- **MURAVIEV, A. V.** ; **SMOLSKI, V. O** ; **LOPARO, Z. E.** ; **VODOPYANOV, K. L.** Massively parallel sensing of trace molecules and their isotopologues with broadband subharmonic mid-infrared frequency combs. *Nature Photonics*, 2018, vol. 12, 209-214
- **TIMMERS, H. et al.** Molecular fingerprinting with bright, broadband infrared frequency combs.. *Optica*, 2018, vol. 5, 727
- **TRUONG, G.-W. et al.** Accurate frequency referencing for fieldable dual-comb spectroscopy.. *Opt. Express*, 2016, vol. 24, 30495
- **IDEGUCHI, T** ; **POISSON, A** ; **GUELACHVILI, G** ; **HÄNSCH, T. W.** ; **PICQUÉ, N.** Adaptive dual-comb spectroscopy in the green region.. *Optics Letters*, 2012, vol. 37, 4847-4849
- **IDEGUCHI, T** ; **POISSON, A** ; **GUELACHVILI, G** ; **PICQUÉ, N** ; **HÄNSCH, T. W.** Adaptive real-time dual-comb spectroscopy. *Nature communications*, 2014, vol. 5, 3375
- **GIACCARI, P** ; **DESCHÊNES, J.-D.** ; **SAUCIER, P** ; **GENEST, J.** ; **TREMBLAY, P.** Active Fourier-transform spectroscopy combining the direct RF beating of two fiber-based mode-locked lasers with a novel referencing method.. *Optics Express*, 2008, vol. 16, 4347-4365
- **CASSINERIO, M** ; **GAMBETTA, A.** ; **COLUCCELLI, N.** ; **LAPORTA, P** ; **GALZERANO, G.** Absolute dual-comb spectroscopy at 1.55 $\mu$m by free-running Er:fiber lasers.. *Applied Physics Letters*, 2014, vol. 104, 231102
- **LINK, S. M** ; **MAAS, D. J. H. C.** ; **WALDBURGER, D** ; **KELLER, U.** Dual-comb spectroscopy of water vapor with a free-running semiconductor disk laser.. *Science*, 2017, vol. 356, 1164-1168
- **ZNAKOVSKAYA, I. et al.** Dual frequency comb spectroscopy with a single laser.. *Optics Letters*, 2014, vol. 39, 5471-5474
- **IDEGUCHI, T.** ; **NAKAMURA, T.** ; **KOBAYASHI, Y.** ; **GODA, K.** Kerr-lens mode-locked bidirectional dual-comb ring laser for broadband dual-comb spectroscopy.. *Optica*, 2016, vol. 3, 748-753

- **NURMEMET, A.** ; **KAYES, IMRUL, M.** ; **REKIK, A.** ; **ROCHETTE, M.** Bidirectional mode-locked thulium-doped fiber laser.. *Applied Optics*, 2018, vol. 57, 7198-7202

- **AKOSMAN, A. E.** ; **SANDER, M. Y.** Dual comb generation from a mode-locked fiber laser with orthogonally polarized interlaced pulses.. *Optics Express*, 2017, vol. 25, 18592-18602

- **NAKAJIMA, Y.** ; **HATA, Y.** ; **MINOSHIMA, K.** All-polarization-maintaining, polarization-multiplexed, dual-comb fiber laser with a nonlinear amplifying loop mirror.. *Optics Express*, 2019, vol. 27, 14648-14656

- **LINK, S. M. et al.** Dual-comb modelocked laser.. *Optics Express*, 2015, vol. 23, 5521-5531

- **NÜRNBERG, J. et al.** An unstabilized femtosecond semiconductor laser for dual-comb spectroscopy of acetylene.. *Optics Express*, 2019, vol. 27, 3190-3199

- **EVANS, J. M** ; **SPENCE, D. E.** ; **BURNS, D.** ; **SIBBETT, W.** *Dual-wavelength self-mode-locked Ti:sapphire laser.*, 1993, vol. 18, 1074-1076

- **ZHANG, H** ; **TANG, D. Y.** ; **WU, X.** ; **ZHAO, L. M.** Multi-wavelength dissipative soliton operation of an erbium-doped fiber laser.. *Optics Express*, 2009, vol. 17, 12692-12697

- **ZHAO, X. et al.** Switchable, dual-wavelength passively mode-locked ultrafast fiber laser based on a single-wall carbon nanotube modelocker and intra-cavity loss tuning.. *Optics Express*, 2011, vol. 19, 1168-1173

- **LIU, X. et al.** Versatile multi-wavelength ultrafast fiber laser mode-locked by carbon nanotubes.. *Scientific Reports*, 2013, vol. 3, 2718

- **ZHAO, X. et al.** Picometer-resolution dual-comb spectroscopy with a free-running fibre laser.. *Optics Express*, 2016, vol. 24, 21833-21845

- **LIAO, R. et al.** Dual-comb spectroscopy with a single free-running thulium-doped fiber laser.. *Optics Express*, 2018, vol. 26, 11046-11054

- **NAKAJIMA, Y** ; **HATA, Y.** ; **MINOSHIMA, K.** All-Polarization-Maintaining Dual-Comb Fiber Laser with Nonlinear Amplifying Loop Mirror.. *Conference on Lasers and Electro-Optics 1, STu4K.4*, 2018

- **LI, R. et al.** All-polarization-maintaining dual-wavelength mode-locked fiber laser based on Sagnac loop filter.. *Optics Express*, 2018, vol. 26, 28302-28311

- **FELLINGER, J.** ; **WINKLER, G** ; **MAYER, A. S** ; **STEIDLE, L. R.** ; **HECKL, O. H.** Tunable dual-color operation of Yb:fiber laser via mechanical spectral subdivision.. *Optics Express*, 2019, vol. 27, 5478-5466

- **CHEN, J. et al.** Dual-comb spectroscopy of methane based on a free-running Erbium-doped fiber laser.. *Optics Express*, 2019, vol. 27, 11406-11412

- **LUO, X. et al.** Tunable and switchable all-fiber dual-wavelength mode locked laser based on Lyot filtering effect.. *Optics Express*, 2019, vol. 27, 14635-14647

- **SAULE, T. et al.** Phase-stable, multi-$\mu$J femtosecond pulses from a repetition-rate tunable Ti:Sa-oscillator-seeded Yb-fiber amplifier.. *Applied Physics B*, 2017, vol. 123

- **BRIDA, D** ; **KRAUSS, G** ; **SELL, A.** ; **LEITENSTORFER, A.** Ultrabroadband Er:fiber lasers: Ultrabroadband Er:fiber lasers.. *Laser & Photonics Reviews*, 2014, vol. 8, 409-428

- **GAIDA, C. et al.** High-power frequency comb at 2 $\mu$m wavelength emitted by a Tm-doped fiber laser system.. *Optics Letters*, 2018, vol. 43, 5178

- **JOCHER, C.** ; **EIDAM, T** ; **HÄDRICH, S** ; **LIMPERT, J.** ; **TÜNNERMANN, A.** Sub 25 fs pulses from solid-core nonlinear compression stage at 250 W of average power. *Optics Letters*, 2012, vol. 37, 4407

- **GAIDA, C. et al.** Self-compression in a solid fiber to 24 MW peak power with few-cycle pulses at 2 $\mu$m wavelength.. *Optics Letters*, 2015, vol. 40 (22), 5160-5163

- **SCHULTE, J.** ; **SARTORIUS, T** ; **WEITENBERG, J.** ; **VERNALEKEN, A** ; **RUSSBUELDT, P.** Nonlinear pulse compression in a multi-pass cell. *Optics Letters*, 2016, vol. 41, 4511

- **FRITSCH, K** ; **POETZLBERGER, M.** ; **PERVAK, V** ; **BRONS, J.** ; **PRONIN, O.** All-solid-state multipass spectral broadening to sub-20 fs.. *Optics Letters*, 2018, vol. 43, 4643

- **GAIDA, C. et al.** Watt-scale super-octave mid-infrared intrapulse difference frequency generation.. *Light: Science & Applications*, 2018, vol. 7

- **BOYD, R. W.** Nonlinear optics.. Academic Press, 2008

- **FATTAHI, H.** ; **SCHWARZ, A.** ; **KEIBER, S** ; **KARPOWICZ, N.** Efficient, octave-spanning difference-frequency generation using few-cycle pulses in simple collinear geometry.. *Optics Letters*, 2013, vol. 38, 4216

- **KÜBLER, C** ; **HUBER, R.** ; **LEITENSTORFER, A.** Ultrabroadband terahertz pulses: generation and field-resolved detection.. *Semiconductor Science and Technology*, 2005, vol. 20, S128-S133

- **PUPEZA, I. et al.** High-power sub-two-cycle mid-infrared pulses at 100 MHz repetition rate.. *Nature Photonics*, 2015, vol. 9, 721-724

- **BUTLER, T. P. et al.** Watt-scale 50-MHz source of single-cycle waveform-stable pulses in the molecular fingerprint region.. *Optics Letters*, 2019, vol. 44, 1730

- **TONOUCHI, M.** Cutting-edge terahertz technology.. *Nature Photonics*, 2007, vol. 1, 97-105

- **XU, J. et al.** Three-octave terahertz pulses from optical rectification of 20 fs, 1 μ m, 78 MHz pulses in GaP.. *J. Phys. B: At. Mol. Opt. Phys.*, 2018, vol. 51, 154002
- Train of Ultrashort Mid-Infrared Pulses with Sub-mrad Carrier-Envelope Phase Stability.. **HUSSAIN, S. A.** ; **SCHWEINBERGER, W** ; **BUBERL, T.** ; **HOFER, C** ; **PUPEZA, I.** 2019 Conference on Lasers and Electro-Optics Europe & European Quantum Electronics Conference (CLEO/Europe-EQEC). IEEE, 2019, 1-1
- **WU, Q.** ; **ZHANG, X. -C.** Free-space electro-optic sampling of terahertz beams.. *Applied Physics Letters*, 1995, vol. 67, 3523-3525
- **NAHATA, A.** ; **WELING, A. S.** ; **HEINZ, T. F.** A wideband coherent terahertz spectroscopy system using optical rectification and electro-optic sampling.. *Applied Physics Letters*, 1996, vol. 69, 2321-2323
- **GALLOT, G.** ; **GRISCHKOWSKY, D.** Electro-optic detection of terahertz radiation.. *Journal of the Optical Society of America B*, 1999, vol. 16, 1204

- **LOACHIM PUPEZA et al.** Field-resolved infrared spectroscopy of biological systems. manuscript under revision. *Nature*, 2020, vol. 577, 52-59
- **CODDINGTON, I.** ; **SWANN, W. C.** ; **NEWBURY, N. R.** Time-domain spectroscopy of molecular free-induction decay in the infrared.. *Optics Letters*, 2010, vol. 35, 1395
- **KOWLIGY, A. S. et al.** Infrared electric field sampled frequency comb spectroscopy.. *Sci. Adv.*, 2019, vol. 5, eaaw8794
- **KEIBER, S. et al.** Electro-optic sampling of near-infrared waveforms.. *Nature Photonics*, 2016, vol. 10, 159-162
- **PORER, M** ; **MÉNARD, J.-M.** ; **HUBER, R.** Shot noise reduced terahertz detection via spectrally postfiltered electro-optic sampling.. *Optics Letters*, 2014, vol. 39, 2435
- **SCHWEINBERGER** ; **VAMOS** ; **XU** ; **HUSSAIN** ; **BAUNE** ; **RODE** ; **PUPEZA**. Interferometric delay tracking for low-noise Mach-Zehnder-type scanning measurements. *Opt. Express*, 2019, vol. 27, 4789-4798